# EUROPEAN PATENT APPLICATION

(11) **EP 1 838 103 A2**
(43) Date of publication of application: **26.09.2007**
(21) Application number: 07005294.9
(22) Date of filing: 14.03.2007
(51) Int. Cl.: H04N 7/173

(54) **Method and system for providing file**

(30) Priority: 10.11.2006 KR 20060111088; 08.12.2006 KR 20060125042
(71) Applicant: Daewoo Electronics Corporation, Seoul (KR)
(72) Inventor: Jun-San, Kim, Seoul (KR); Yun-Su, Jung, Yeongdeungpo-gu Seoul (DE); Won-Ki, Kim, Seongnam-si Gyeonnggi-do (KR)
(74) Representative: Thun, Clemens

(57) **Abstract**

A method and a system for providing a file. The method of providing a file by using at least one server linked with a plurality of terminals through a network, the method includes: determining whether there exists a destination terminal which stores a requested specific video-on-demand (VOD) file by searching a database which stores a list of VOD files stored in the plurality of terminals, when a request terminal that is one of the plurality of terminals requests a specific VOD file to be transmitted; and transmitting access information of the destination terminal to the request terminal when there exists the destination terminal and transmitting the requested specific VOD file to the request terminal when there exists no destination terminal. Accordingly, a VOD content is directly transmitted among terminals under a control of a VOD server, when a VOD service is provided. Therefore, it is possible to remarkably reduce a load of the VOD server by reducing traffic which was concentrated on the VOD server in the past.

## Description

### BACKGROUND

### 1. Technical Field

The present invention relates to a method and a system for providing a file, and more particularly, to a method and a system for providing a file, which are capable of reducing a load of a VOD server by allowing a VOD file to be transmitted among IP set-top boxes when a VOD service is provided.

### 2. Related Art

In general, an Internet Protocol Television (hereinafter, abbreviated to IPTV) service serves to provide information, moving picture contents, and broadcasting contents to a television set by using high-speed internet.

The IPTV service is one of digital convergence techniques, since the IPTV service is obtained by combining an Internet service with a television broadcasting service. The IPTV service enables even a user, who is not used to a computer, to search the Internet through a television set to use various contents and value-added services, which can be provided through the Internet, for example, movie service, home shopping service, home banking service, an on-line game service, and MP3 service.

In order to use the IPTV service, there are required a television set, an IP set-top box, and software which can treat a request of a TV viewer on a broadcasting medium. At this time, the IP set-top box is connected to a wide area communication network such as the Internet. The IP set-top box serves to process IP video signals and convert the IP video signals into standard TV signals. The IP set-top box may be integrated into the television set.

The IPTV service is similar to the general cable broadcasting service or satellite broadcasting service in that the IPTV service provides a broadcasting content, except that the IPTV service is interactive. The interactive characteristic allows a video-on-demand (hereinafter, abbreviated to VOD) service to be provided.

The VOD service is designed to allow a viewer to select and watch a desired program at a desired time. A VOD server, which provides the VOD service, compresses video information and transmits the video information through a backbone network. The VOD data is transmitted to the IP set-top box installed in a house of a user and recovered by the IP set-top box as digital images and voice.

On the other hand, since the IP set-top box can forward the request of the user to the VOD server, the IP set-top box allows the user to watch the desired broadcasting program at a desired time. In addition, the VOD server includes massive storage space in which images or voice can be stored. It has to be possible to search a database in real time by effectively establishing the database.

In the past, in the VOD service, when the user accesses the VOD server of a content provider and requests the VOD server to provide a desired VOD content, the VOD server generally provides the requested VOD content to the user in a downloading or streaming manner.

For the VOD service, a plurality of terminals of users, for example, IP set-top boxes access the VOD server. In this case, when a plurality of users concurrently accesses the VOD server, the VOD server is overloaded, thereby reducing the download speed. When the VOD server is seriously overloaded, some terminals may be disconnected from the VOD server. The aforementioned problems lead to a deterioration of service quality.

Accordingly, a VOD service provider intends to solve the aforementioned problems by increasing the number of VOD servers or network bandwidth. However, since it is physically and economically limited to increase the number of the VOD servers and the network bandwidth, the aforementioned solution cannot basically solve the problems. Accordingly, the aforementioned problems obstruct the development and popularization of the VOD service which will be in great demands.

### SUMMARY

The present invention provides a method and a system for providing a file capable of remarkably reducing a load of a VOD server by allowing a VOD content to be transmitted among terminals when a VOD service is provided.

According to an aspect of the present invention, there is provided a method of providing a file by using at least one server linked with a plurality of terminals through a network, the method comprising: determining whether there exists a destination terminal which stores a requested specific video-on-demand (VOD) file by searching a database which stores a list of VOD files stored in the plurality of terminals, when a request terminal that is one of the plurality of terminals requests a specific VOD file to be transmitted; and transmitting access information of the destination terminal to the request terminal when there exists the destination terminal and transmitting the requested specific VOD file to the request terminal when there exists no destination terminal.

According to another aspect of the present invention, there is provided a method of providing a file, the method comprising: allowing a request IP set-top box to request a control server to provide a specific VOD file; allowing the control server to determine whether there exists a destination IP set-top box which can provide the requested specific VOD file; and transmitting access information of the destination IP set-top box to the request IP set-top box when there exists the destination IP set-top box and transmitting access information of a VOD server, which can provide the requested VOD file, to the request IP set-top box when there exists no destination IP set-top box.

According to another aspect of the present invention, there is provided a method of providing a file, the method comprising: allowing a request IP set-top box to request a VOD server to stream a specific VOD file; allowing the VOD server to determine whether there exists a destination IP set-top box which is streaming the requested specific VOD file; and transmitting access information of the destination IP set-top box to the request IP set-top box when there exists the destination IP set-top box and streaming the requested VOD file to the request IP set-top box when there exists no destination IP set-top box.

According to another aspect of the present invention, there is provided a system comprising: a plurality of set-top boxes which are connected to a network; and a VOD server which determines whether there exists a destination IP set-top box that can provide the requested specific VOD file among the plurality of set-top boxes, transmits access information of the destination IP set-top box to the request IP set-top box when there exists the destination IP set-top box, and transmits the requested specific VOD file to the request IP set-top box when there exists no destination IP set-top box.

### BRIEF DESCRIPTION OF THE DRAWINGS

The above and other features and advantages of the present invention will become more apparent by describing in detail exemplary embodiments thereof with reference to the attached drawings in which:
FIG. 1 is a block diagram illustrating a structure of a system for embodying a method of providing a file according to a first embodiment of the present invention;
FIG. 2 is a block diagram illustrating a structure of a terminal shown in FIG. 1;
FIG. 3 is a flowchart illustrating a method of providing a file according to a first embodiment of the present invention;
FIG. 4 illustrates an example of a system for embodying a method of transmitting a VOD file according to a second embodiment of the present invention;
FIG. 5 illustrates an operation in which a user downloads a VOD file by using an IP set-top box according to a second embodiment of the present invention;
FIG. 6 illustrates another operation in which a user downloads a VOD file by using an IP set-top box according to a second embodiment of the present invention;
FIG. 7 illustrates still another operation in which a user downloads a VOD file by using an IP set-top box according to a second embodiment of the present invention;
FIG. 8 illustrates further still another operation in which a user downloads a VOD file by using an IP set-top box according to a second embodiment of the present invention;
FIG. 9 illustrates an operation in which a user receives a VOD file in a streaming manner by using an IP set-top box according to a third embodiment of the present invention;
FIG. 10 illustrates another operation in which a user receives a VOD file in a streaming manner by using an IP set-top box according to a third embodiment of the present invention; and
FIG. 11 illustrates still another operation in which a user receives a VOD file in a streaming manner by using an IP set-top box according to a third embodiment of the present invention.

### DESCRIPTION OF EXEMPLARY EMBODIMENTS

Now, preferred embodiments of the present invention will be described in detail with reference to the attached drawings.

### [First Embodiment]

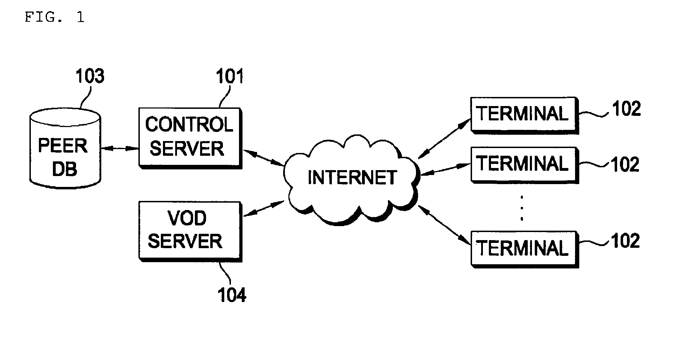

FIG. 1 is a block diagram illustrating a structure of a system for embodying a method of providing a file according to a first embodiment of the present invention.

Referring to FIG. 1, the system includes a control server 101, a peer database 103 connected to the control server 101, a VOD server 104, and a plurality of terminals 102. The control server 101, the VOD server 104, and the terminals 102 can be linked with one another through a wide area network, for example, the Internet.

The terminals 102 may be Internet protocol set-top boxes (IP set-top boxes). Alternatively, the terminals 102 may be various devices such as PCs, PMPs, and the like which serve to provide an IPTV service.

Hereinafter, a terminal among the terminals 102, which requests a specific VOD file to be transmitted, is referred to as a request terminal. A terminal, which can provide the requested VOD file, is referred to as a destination terminal. For example, the destination terminal may be a terminal which stores the requested specific VOD file. The destination terminal may exist or not.

The control server 101 stores access information and a list of VOD files in the peer database 103 by updating the access information of the terminals 102 and the list of VOD files stored in the terminals 102 in real time. That is, the control server 101 can perform a function of a P2P server. Then, the access information of the terminals 102 includes an IP address through which the terminals 102 can be accessed, an on/off state, a traffic situation, transmission performance, a fault situation, and the like.

When a request terminal among the terminals 102 connected to a network requests a specific VOD file to be downloaded, the control server 101 searches the peer database 103 for a destination terminal that stores the requested VOD file among the terminals.

The control server 101 may find one or more destination terminals which store the requested VOD file through the search process. Alternatively, the control server 101 may find no destination terminal. When the control server 101 finds one or more destination terminal, IP information of the most suitable destination terminal is provided to the request terminal in consideration of access information of the destination terminals. On the other hand, when the control server 101 finds no destination terminal, the control server 101 provides the IP address of the VOD server 104 to the request terminal.

The peer database 103 stores a list of VOD files stored in the terminals 102 and access information of the terminals 102, for example, an IP address, an on/off state, a traffic situation, transmission performance, a fault situation, and the like.

The VOD server 104 may be a VOD service server which provides a VOD file in a typical server-client manner. However, the control server and the peer database may be included in the VOD server to form an integration server according to execution environments. The aforementioned case will be described through the following second embodiment.

On the other hand, the VOD file may be a VOD content provided through a VOD service, that is, a digital multimedia content, or a part of the VOD content. For example, when a VOD content provided through a VOD service is a specific movie, the VOD file may be the entire movie file or a file obtained by dividing the movie into a plurality of blocks. Specifically, since the capacity of the VOD content file of one VOD content is large, the VOD content may be divided into a plurality of blocks.

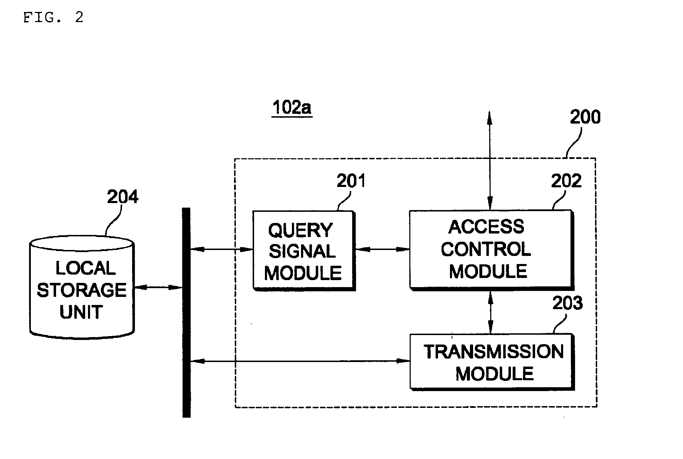

FIG. 2 is a block diagram illustrating a structure of a terminal shown in FIG. 1. A terminal 102a shown in FIG. 2 indicates one of the terminals 102 shown in FIG. 1.

Referring to FIGs. 1 and 2, the terminal 102a includes an input/output control unit 200 and a local storage unit 204. Hereinafter, it is assumed that the terminal 102a is a request terminal.

The input/output control unit 200 controls an access to the control server 101, the VOD server 104, or a destination terminal and a download of a VOD file transmitted from the VOD server or destination terminal. Here, the input/output control unit 200 may include a query signal module 201, an access control module 202, and a transmission module 203. The aforementioned input/output control unit 200 can be embodied as program codes. The program codes can be executed by a microprocessor (not shown) generally included in the terminal 102.

The query signal module 201 serves to generate a transmission request signal for a specific VOD file and transmit the transmission request signal to the control server 101. The query signal module 201 automatically transmits the request signal for the corresponding VOD file to the control server 101, when there is a VOD file, which is incompletely downloaded, in the terminal 102a including the query signal module 201. In addition, when the user of the terminal 102a requests a desired specific VOD file to be transmitted through a user interface, the query signal module 201 generates a request signal for the requested specific VOD file and transmits the request signal to the control server 101. The user interface may include a search window, a browser, an electronic program guide, and the like.

In addition, the query signal module 201 automatically accesses the control server 101 and transmits information on the terminal 102 including the query signal module 201, when the terminal 102a is powered on. At this time, the transmitted information on the terminal 102a may include the VOD files stored in the terminal 102a and a list of the VOD files which are not completely downloaded, an IP address of the terminal 102a, a communication state, and the like. Here, the list of the VOD files is stored in the local storage unit 204.

The access control module 202 serves to control a connection between the terminal 102a and the control server 101, a connection between the terminal 102a and the destination terminal, and a connection between the terminal 102a and the VOD server 104. Particularly, the access control module 202 allows the terminal 102a to access the destination terminal by using IP address of the destination terminal received from the control server 101. In addition, when the control server 101 finds no destination terminal and transmits the IP address of the VOD server 104, the terminal 102a is allowed to access the VOD server 104.

On the other hand, the access control module 202 may serve to determine whether the access control module 202 allows the request terminal to access the terminal 102a in a process of uploading the VOD file, when the terminal 102a operates as the destination terminal. In this case, the access control module 202 can determine whether the access control module 202 allows the request terminal to access the terminal 102a depending on whether the IP address of the request terminal transmitted from the control server 101 is matched with the IP address of the terminal which tries to access the terminal 102a.

When the terminal 102a including the transmission module 203 operates as the request terminal, the transmission module 203 downloads a VOD file from the destination terminal or VOD server 104. When the terminal 102a including the transmission module 203 operates as the destination terminal, the transmission module 203 uploads a VOD file to the request terminal.

The local storage unit 204 serves to store VOD files to be downloaded or uploaded and the stored VOD files, and a list of VOD files which are incompletely downloaded.

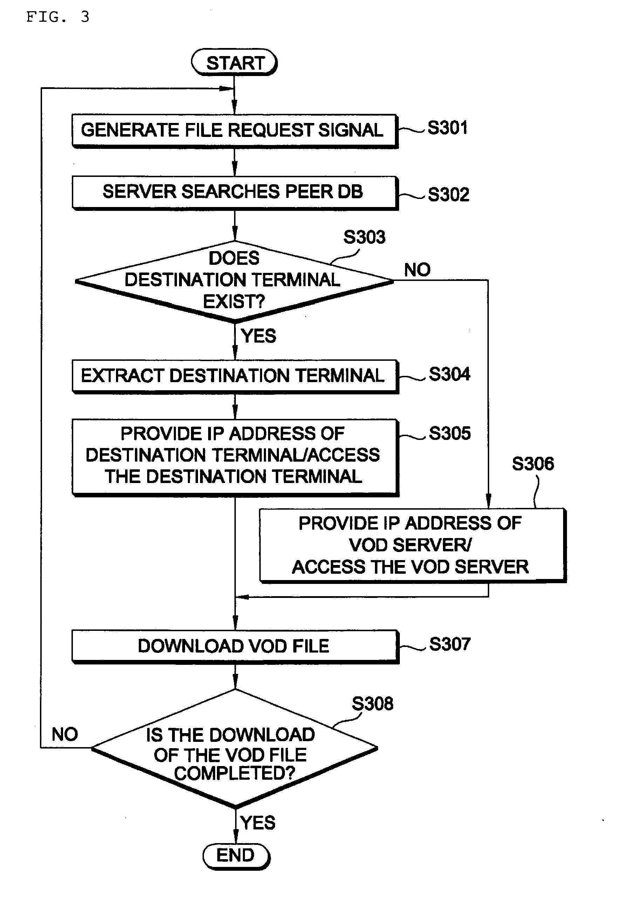

FIG. 3 is a flowchart illustrating a method of providing a file according to a first embodiment of the present invention.

Referring to FIGs. 1 and 3, a request terminal that is one of the terminals 102 connected to the network requests the control server 101 to transmit a specific VOD file. For example, when a user selects a VOD content which the user wants to download, the request terminal generates a transmission request signal for the VOD file desired to be transmitted and transmits the transmission request signal to the control server 101 (S301).

Then, the control server 101 receives the transmission request signal, searches the peer database 103 for a destination terminal which stores the requested VOD file (S302), and determines whether the destination terminal which stores the requested VOD file exists (S303).

As a result of the determination, when there exists a destination terminal which stores the requested VOD file, the control server 101 extracts the IP address of the destination terminal (S304). At this time, there may exist a plurality of destination terminals. In this case, the control server 101 extracts an IP address of a destination terminal which can upload the VOD file most speedily, in consideration of access information of the extracted destination terminals or network state. For example, the control server 101 can extract the IP address of the destination terminal in a good network state, the destination terminal having the shortest estimated transmission path, or the destination terminal having no fault.

Subsequently, the control server 101 transmits the IP address of the extracted destination terminal to the request terminal. Then, the request terminal accesses the destination terminal by using the IP address (S305).

On the other hand, when there is no destination terminal which stores the request VOD file, the control server 101 transmits the IP address of the VOD server 104 to the request terminal. Then, the request terminal accesses the VOD server 104 by using the IP address (S306).

When the request terminal accesses the destination terminal or VOD server 104, the request terminal downloads the requested VOD file (S307). Then the request terminal determines whether the requested VOD file is completely downloaded (S308). When the requested VOD file is incompletely downloaded, the request terminal can request the control server 101 to retransmit the VOD file by generating the transmission request signal, again. For example, when the request terminal is disconnected from the destination terminal due to a network problem, or when the destination terminal is powered off, the request terminal may not completely download the requested VOD file. In this case, the request terminal requests the control server 101 to retransmit the requested VOD file.

### [Second Embodiment]

In the following second embodiment, there is described a case where the VOD server includes functions of the aforementioned control server and the peer database, and a plurality of destination terminals can provide a VOD file.

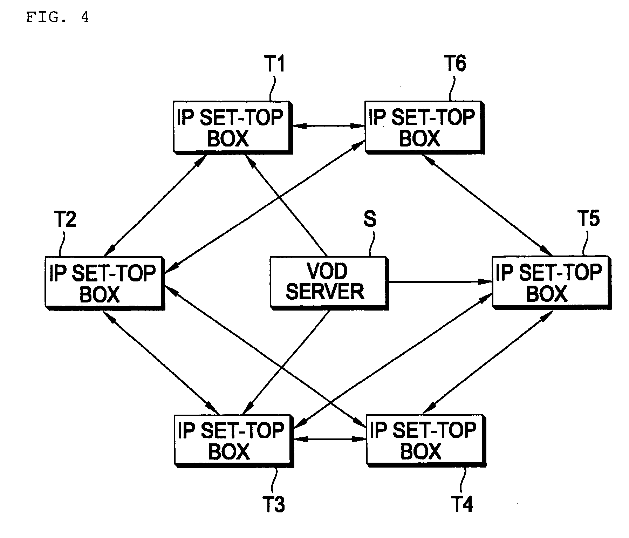

FIG. 4 illustrates an example of a system for embodying a method of transmitting a VOD file according to a second embodiment of the present invention.

Referring to FIG. 4, IP set-top boxes T1 to T6 directly download VOD files from other IP set-top boxes T1 to T6 with reference to a list of VOD files which is managed by a VOD server S.

A transmission protocol of the VOD file and an application program installed in and the IP set-top boxes T1 to T6 may have a Bit-Torrent type. For example, a Bit-Torrent client may be installed in each IP set-top box T1 to T6.

The VOD server S stores and manages a plurality of VOD files. The VOD server stores and manages access information of the IP set-top boxes T1 to T6 and a list of the VOD files stored in the IP set-top boxes T1 to T6 by updating the access information and the list of the VOD files stored in the IP set-top boxes T1 to T6. That is, the VOD server S can perform a function of a P2P server. At this time, the access information of the IP set-top boxes T1 to T6 includes an IP address through which the IP set-top boxes can be accessed, an on/off state, a traffic situation, transmission performance, a fault situation, and the like.

In addition, when a request IP set-top box among the IP set-top boxes connected to a network requests the VOD server S to download a specific VOD file, the VOD server S searches the list of the VOD files, which is managed by the VOD server, for a destination IP set-top box which stores the requested VOD file.

The VOD server S may find one or more destination set-top boxes which store the requested VOD file through the search process. Alternatively, the VOD server S may find no destination IP set-top box. When the VOD server S finds one or more destination IP set-top boxes, access information of the destination IP set-top boxes is provided to the request IP set-top box. On the other hand, when the VOD server S finds no destination IP set-top box, the VOD server S directly provides the requested VOD file, which is included in the VOD server S, to the request IP set-top box.

The request IP set-top box may indicate an IP set-top box among the IP set-top boxes T1 to T6, which requests a specific VOD file to be transmitted. The destination IP set-top box may indicate an IP set-top box among the IP set-top boxes T1 to T6, which can provide the VOD file requested by the request IP set-top box. For example, the destination IP set-top box may indicate an IP set-top box among the IP set-top boxes T1 to T6, which stores the requested VOD file.

On the other hand, the VOD file may be a VOD content provided through a VOD service, that is, a digital multimedia content, or a part of a VOD content. When the VOD file is a piece of a VOD content, as the size of the VOD content increases, the number of the VOD files increases. Specifically, the large-sized VOD content may be divided into a large number of pieces.

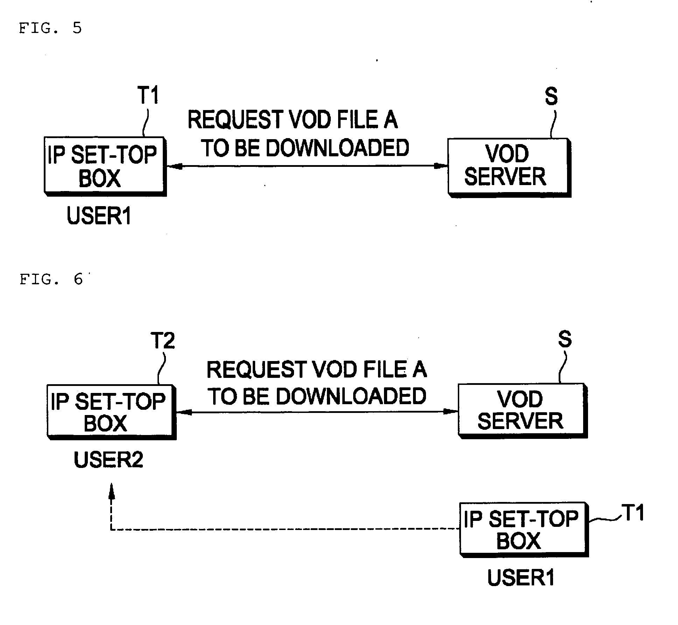

FIG. 5 illustrates an operation in which a user downloads a VOD file by using an IP set-top box according to a second embodiment of the present invention.

Referring to FIGs. 4 and 5, a first user user1 requests the VOD server S to transmit a specific VOD file and downloads the specific VOD file from the VOD server by using an IP set-top box T1 of the first user user1. In this case, the VOD file A does not exist in any other IP set-top boxes T2 to T6. When the download of the specific VOD file is completed, the VOD file A is stored in a hard disk of the IP set-top box T1 of the first user user1.

FIG. 6 illustrates another operation in which a user downloads a VOD file by using an IP set-top box according to a second embodiment of the present invention.

Referring to FIGs. 4 and 6, a second user user2 requests the VOD server S to transmit a VOD file A. The VOD server S checks whether the VOD file A is stored in an IP set-top box T1 of the first user user1 and informs the IP set-top box T2 of the second user user2 that the VOD file A is stored in the IP set-top box T1 of the first user user1. That is, the VOD server S transmits access information of a destination IP set-top box in which the VOD file A is stored to a request IP set-top box.

The access information includes an IP address, a traffic situation, transmission performance, a fault situation, and an on/off state of the IP set-top box T1 of the first user user1, in which the VOD file is stored. The IP set-top box T2 of the second user user2 directly accesses the IP set-top box T1 of the first user user1 and downloads the VOD file A from the IP set-top box T1.

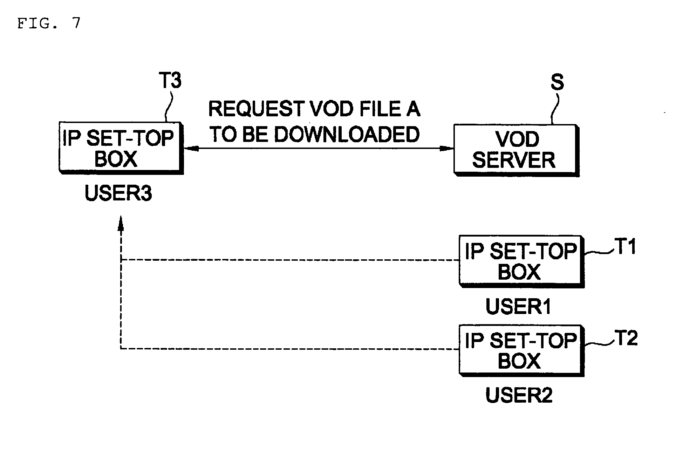

FIG. 7 illustrates still another operation in which a user downloads a VOD file by using an IP set-top box according to a second embodiment of the present invention.

Referring to FIG. 7, a third user user3 requests the VOD server S to transmit a VOD file A. The VOD server S checks whether the VOD file A is stored in the IP set-top box T1 of the first user user1 and the IP set-top box T2 of the second user user2 and informs the IP set-top box T3 of the third user user3 that the VOD file A is stored in the IP set-top boxes T1 and T2. That is, the VOD server S transmits access information of the IP set-top boxes T1 and T2, in which the VOD file is stored, to the IP set-top box T3 of the third user user3, which is a request IP set-top box.

The access information includes IP addresses, traffic situations, transmission performance, fault situations, on/off states, and the like of the IP set-top boxes T1 and T2, in which the VOD file is stored. The IP set-top box T3 of the third user user3 directly accesses the IP set-top box T1 of the first user user1 and the IP set-top box T2 of the second user user2, of which IP addresses are included in the access information, and downloads the VOD file A from the IP set-top boxes T1 and T2.

At this time, the IP set-top box T3 of the third user user3, which is a request IP set-top box, can control a download ratio, in consideration of traffic situations, transmission performance, and fault situations, and the like included in the access information of the IP set-top box T1 of the first user user1 and the IP set-top box T2 of the second user user2 which are the destination IP set-top boxes. For example, the IP set-top box T3 of the third user user3 may download a large amount of data from the IP set-top box of which transmission performance is good and download a small amount of data from the IP set-top box of which transmission performance is poor. In addition, a large amount of data may be downloaded from the IP set-top box in which a traffic situation is good. A small amount of data may be downloaded from the IP set-top box in which a traffic situation is bad. A traffic situation, transmission performance, or a fault situation will be preferentially considered depending on execution environments.

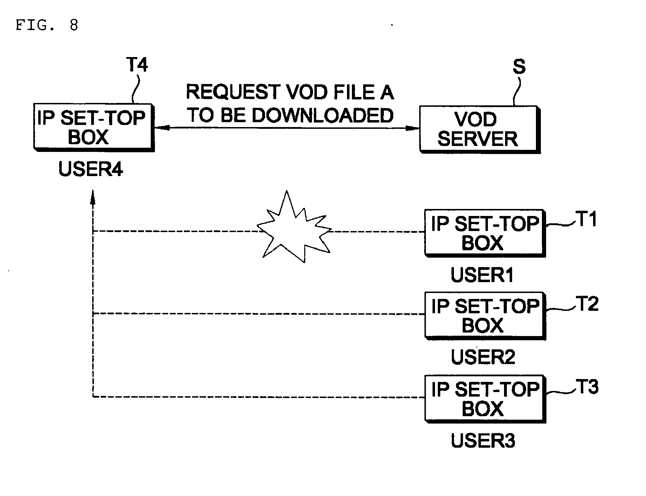

FIG. 8 illustrates further still another operation in which a user downloads a VOD file by using an IP set-top box according to a second embodiment of the present invention.

Referring to FIG. 5d, a fourth user user4 requests the VOD server S to transmit a VOD file A by using an IP set-top box T4 of the fourth user user4. The VOD server S informs the IP set-top box T4 of the fourth user user4 that the VOD file A is stored in the IP set-top boxes T1 to T3 by checking whether the VOD file A is stored in the IP set-top box T1 of the first user user1, the IP set-top box T2 of the second user user2, and the IP set-top box T3 of the third user user3. That is, the VOD server S transmits access information of the IP set-top boxes T1 to T3, in which the VOD file is stored, to the IP set-top box T4 of the fourth user user4, which is a request IP set-top box.

The access information includes IP addresses, traffic situations, transmission performance, fault situations, on/off states, and the like of the IP set-top boxes T1 to T3, in which the VOD file is stored. The IP set-top box T4 of the fourth user user4 downloads the VOD file A from the IP set-top boxes T1 to T3 by directly accessing the IP set-top boxes T1 to T3 of which IP addresses are included in the access information. At this time, as described above, the IP set-top box T4 of the fourth user user4 can control a download ratio, in consideration of traffic situations, transmission performance, fault situations, and the like included in the access information of the IP set-top boxes T1 to T3.

On the other hand, when the IP set-top box T4 of the fourth user user4 is disconnected from the IP set-top box T1 of the first user user1, the set-top box T4 of the fourth user user4 can continuously download the rest of the VOD file from the IP set-top box T2 of the second user user2 and the IP set-top box T3 of the third user user3.

Up to now, the process of downloading the VOD file is described. That is, an IP set-top box stores the transmitted VOD file in a hard disk in a downloading manner.

### [Third Embodiment]

In the following embodiment 3, a process of distributing traffic will be described, when a VOD service is provided not in a downloading manner, in which a VOD file is completely downloaded in an IP set-top box, but in a streaming manner. In the third embodiment, a request IP set-top box may indicate an IP set-top box among the IP set-top boxes T1 to T6, which requests a specific VOD file to be streamed. A destination IP set-top box may indicate an IP set-top box among the IP set-top boxes T1 to T6, which can stream a part of the VOD file requested by the request IP set-top box.

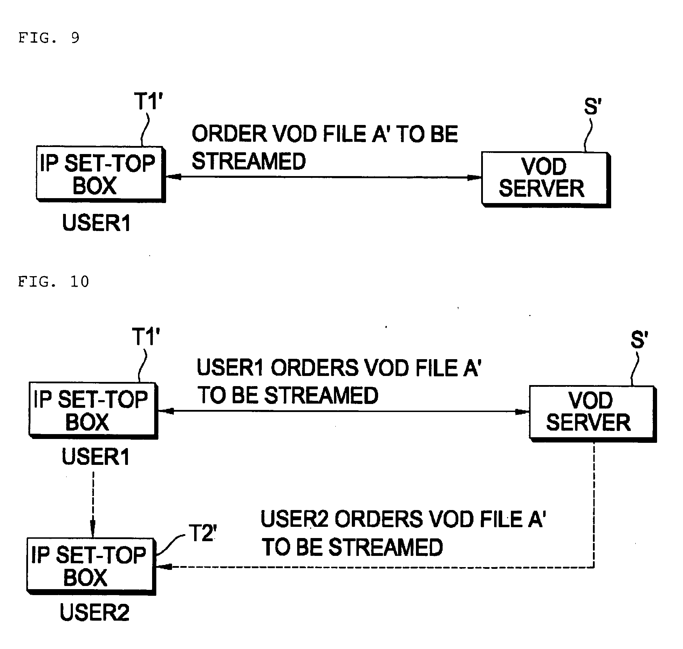

FIG. 9 illustrates an operation in which a user receives a VOD file in a streaming manner by using an IP set-top box according to a third embodiment of the present invention.

Referring to FIG. 9, a first user user1 requests a VOD server S' to stream a VOD file A' and streams the VOD file A' from the VOD server S' by using an IP set-top box T1' of the first user user1. In this case, the VOD file A' is not streamed to any other IP set-top boxes.

FIG. 10 illustrates another operation in which a user receives a VOD file in a streaming manner by using an IP set-top box according to a third embodiment of the present invention.

Referring to FIG. 10, a second user user2 also requests the VOD server S' to stream the VOD file A' by using an IP set-top box T2' of the second user user2. The VOD server S' transmits access information of the IP set-top box T1', which is streaming the VOD file A', to the IP set-top box T2' of the second user user2. In this case, since the IP set-top box T1' is streaming the VOD file A', the IP set-top box T2' of the second user user2 can stream a part of the VOD file A', which is buffered by the IP set-top box T1' of the first user user1, from the IP set-top box T1' of the first user user1. At the same time, the set-top box T2' of the second user user2 can stream the other part of the VOD file A' from the VOD server S'. In this case, the second user user2 may completes streaming of the VOD file A' at the similar time when the first user user1 completes streaming.

Access information includes an IP address, a traffic situation, transmission performance, a fault situation, and an on/off state of the IP set-top box T1' of the first user user1 which is streaming the VOD file A'. The IP set-top box T2' of the second user user2 directly accesses the IP set-top box T1' of the first user user1 and streams the VOD file A' from the IP set-top box T1'.

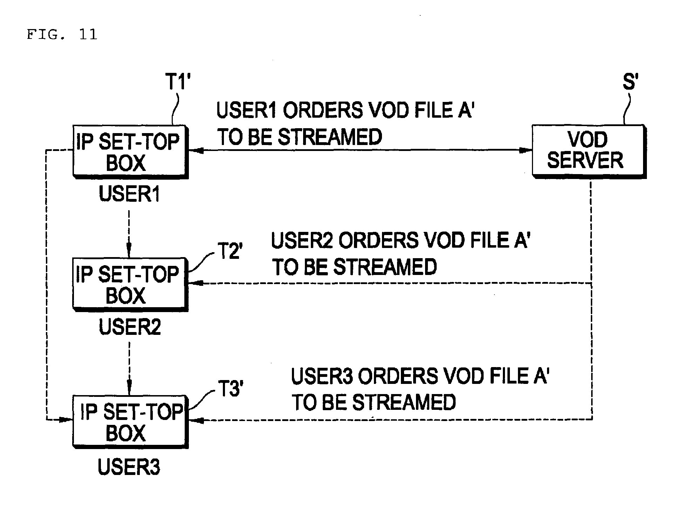

FIG. 11 illustrates still another operation in which a user receives a VOD file in a streaming manner by using an IP set-top box according to a third embodiment of the present invention.

Referring to FIG. 11, a third user user3 requests the VOD server S' to stream the VOD file A' by using an IP set-top box T3' of the third user user3. The VOD server S' transmits access information of the IP set-top boxes T1' and T2', which is streaming the VOD file A', to the IP set-top box T3' of the third user user3, which is a request IP set-top box. In this case, since the IP set-top boxes T1' and T2' are streaming the VOD file A', the set-top box T3' of the third user user3 can stream a part of the VOD file A' , which is buffered by the IP set-top box T1' of the first user user1 and the IP set-top box T2' of the second user user2, from the IP set-top box T1' of the first user user1 and the IP set-top box T2' of the second user user2. At the same time, the set-top box T3' of the third user user3 can stream the other part of the VOD file A' from the VOD server S' .

The access information includes IP addresses, traffic situations, transmission performance, fault situations, and on/off states of the IP set-top boxes T1' and T2' which are streaming the VOD file A'.

At this time, the IP set-top box T3' of the third user user3, which is a request IP set-top box, can control a streaming ratio, in consideration of traffic situations, transmission performance, fault situations, and the like included in the access information of the IP set-top boxes T1' and T2'. For example, the IP set-top box T3' of the third user user3 may download a large amount of data from the IP set-top box of which transmission performance is good and download a small amount of data from the IP set-top box of which transmission performance is poor.

In this case, since the amount of data uploaded by the IP set-top box T1' of the first user user1 may increase, a buffer may be provided so that the amounts of the data uploaded by the IP set-top box T1' of the first user user1 and the IP set-top box T2' of the second user user2 or the speeds of uploading the data of the IP set-top boxes T1' and T2' may be the same.

In addition, since the speeds of uploading data are depending on the performances of the IP set-top boxes, the IP set-top box, which wants to stream the VOD file, can determine a streaming ratio by comparing speeds of streaming the VOD file of the IP set-top boxes.

According to the third embodiment of the present invention, in the VOD streaming service, it is possible to distribute the traffic of the VOD server and improve the streaming speed at the same time by allowing the IP set-top box, which wants to stream the specific VOD file, to stream different parts of the specific VOD file from other IP set-top boxes, which are already streaming the specific VOD file, and the VOD server, respectively.

As described above, in the method and the system for providing a file of the present invention, a VOD content is directly transmitted among terminals under a control of the VOD server, when the VOD service is provided. Accordingly, it is possible to remarkably reduce a load of the VOD server by reducing traffic which was concentrated on the VOD server in the past. In addition, it is possible to improve service quality by increasing a transmission speed of the VOD file transmitted to the terminals, when the VOD service is provided.

## Claims

1. A method for providing a file by using at least one server linked with a plurality of terminals through a network, the method comprising:
determining whether there exists a destination terminal which stores a requested specific video-on-demand (VOD) file by searching a database which stores a list of VOD files stored in the plurality of terminals, when a request terminal that is one of the plurality of terminals requests a specific VOD file to be transmitted; and
transmitting access information of the destination terminal to the request terminal when there exists the destination terminal and transmitting the requested specific VOD file to the request terminal when there exists no destination terminal.

2. The method of claim 1, wherein the access information of the destination terminal includes an IP address through which the destination terminal can be accessed.

3. The method of claim 2, wherein the access information of the destination information includes at least one of an on/off state, a traffic situation, transmission performance, and a fault situation of the destination terminal.

4. A method for providing a file, the method comprising:
allowing a request IP set-top box to request a control server to provide a specific VOD file;
allowing the control server to determine whether there exists a destination IP set-top box which can provide the requested specific VOD file; and
transmitting access information of the destination IP set-top box to the request IP set-top box when there exists the destination IP set-top box and transmitting access information of a VOD server, which can provide the requested VOD file, to the request IP set-top box when there exists no destination IP set-top box.

5. The method of claim 4, further comprising:
allowing the request IP set-top box to access the destination IP set-top box by using the IP address included in the access information of the destination IP set-top box, when the access information of the destination IP set-top box is transmitted from the control server; and
downloading the requested specific VOD file stored in the accessed destination IP set-top box.

6. The method of claim 5, further comprising allowing the request IP set-top box to request the control server to retransmit the requested specific VOD file, when the requested specific VOD file is incompletely downloaded.

7. The method of claim 4, further comprising:
allowing the request set-top box to access the VOD server by using the IP address included in the access information of the VOD server, when the access information of the destination IP set-top box of the VOD server is transmitted from the control server; and
downloading the requested specific VOD file from the accessed VOD server.

8. The method of claim 4, wherein in the transmitting of the access information, when there exist a plurality of destination IP set-top boxes, the control server transmits access information of the plurality of destination IP set-top boxes to the request IP set-top box.

9. The method of claim 8, further comprising:
allowing the request IP set-top box to access the plurality of destination IP set-top boxes by using the IP addresses included in the access information of the plurality of destination IP set-top boxes, when the access information of the plurality of destination IP set-top boxes is transmitted from the control server; and
downloading the requested specific VOD file from the accessed plurality of destination IP set-top boxes.

10. The method of claim 9, wherein the request IP set-top box controls a download ratio in consideration of at least one of traffic situations, on/off states, fault situations, and transmission performance included in the access information of the accessed destination IP set-top boxes, when downloading the requested specific VOD file.

11. A method for providing a file, the method comprising:
allowing a request IP set-top box to request a VOD server to stream a specific VOD file;
allowing the VOD server to determine whether there exists a destination IP set-top box which is streaming the requested specific VOD file; and
transmitting access information of the destination IP set-top box to the request IP set-top box when there exists the destination IP set-top box and streaming the requested VOD file to the request IP set-top box when there exists no destination IP set-top box.

12. The method of claim 11, further comprising:
allowing the request IP set-top box to access the destination IP set-top box by using access information of the destination IP set-top box, when the access information of the destination IP set-top box is transmitted from the VOD server; and
streaming a part of the requested specific VOD file, which is buffered by the accessed destination IP set-top box, from the accessed destination IP set-top box.

13. The method of claim 12, wherein the request IP set-top box streams the rest of the VOD file except the part of the VOD file, which is streamed from the accessed destination IP set-top box, from the VOD server.

14. The method of claim 11, wherein the VOD server transmits the access information of the plurality of destination IP set-top boxes to the request IP set-top box, when there exists a plurality of destination IP set-top boxes.

15. The method of claim 14, wherein the request IP set-top box accesses the plurality of destination IP set-top boxes, streams the requested specific VOD file, and controls a streaming ratio in consideration of at least one of traffic situations, on/off states, fault situations, and transmission performance included in the access information of the plurality of destination IP set-top boxes, when the access information of the plurality of destination IP set-top boxes is transmitted from the VOD server.

16. A system for providing a file, the system comprising:
a plurality of set-top boxes which are connected to a network; and
a VOD server which determines whether there exists a destination IP set-top box that can provide the requested specific VOD file among the plurality of set-top boxes, transmits access information of the destination IP set-top box to the request IP set-top box when there exists the destination IP set-top box, and transmits the requested specific VOD file to the request IP set-top box when there exists no destination IP set-top box.

17. The system of claim 16, wherein the request IP set-top box accesses the destination IP set-top box by using the access information of the destination IP set-top box, which is transmitted from the VOD server, and receives the requested specific VOD file from the accessed destination IP set-top box.
